# FASCICULE DE BREVET EUROPEEN

(11) **EP 3 517 000 B1**
(45) Date de publication et mention de la délivrance du brevet: **24.06.2020**
(21) Numéro de dépôt: 19152895.9
(22) Date de dépôt: 21.01.2019
(51) Int. Cl.: A47J 31/44, A47J 31/46

(54) **MACHINE DE PRÉPARATION DE BOISSONS MUNIE D'UNE TÊTE DE DISTRIBUTION**
GETRÄNKEZUBEREITUNGSMASCHINE MIT EINEIM AUSGABEKOPF
BEVERAGE PREPARATION MACHINE WITH A DISPENSING HEAD

(30) Priorité: 25.01.2018 FR 1850611
(43) Date de publication de la demande: 31.07.2019
(73) Titulaire: SEB S.A., 69130 Ecully (FR)
(72) Inventeur: MORIN, Gilles, 69290 POLLIONNAY (FR); BEAUDET, Olivier, 61140 RIVES D'ANDAINE (FR); LEFORGEAIS, Michel, 14250 TILLY SUR SEULLES (FR)
(74) Mandataire: Bourrières, Patrice

(56) Documents cités:
- WO-A1-2013/008177
- DE-A1-102014 014 801
- DE-U1-202017 105 040
- FR-A1- 2 879 426
- US-A1- 2005 259 508

## Description

La présente invention se rapporte au domaine technique général des machines de préparation de boisson, notamment des machines à café automatiques pour réaliser des préparations à base de lait et/ou de café.

Il est connu des documents EP2611342 ou DE202017105040 une machine de préparation de boissons comportant au moins une buse de distribution de café et un dispositif rotatif d'agitation comprenant un outil rotatif autour d'un axe vertical et destiné à coopérer avec une préparation contenue dans un récipient. Le dispositif rotatif d'agitation comporte un conduit d'acheminement d'eau chaude et/ou de vapeur vers l'outil rotatif.

Dans cette machine de préparation de boissons, la buse de distribution de café est agencée dans une première zone «café» et le dispositif rotatif d'agitation est agencé dans une deuxième zone «lait ». Dans le cas d'une préparation à base de lait et de café, par exemple un cappuccino, le lait sera chauffé et moussé dans un récipient placé dans la deuxième zone «lait» puis le récipient sera déplacé dans la première zone «café ».

Ainsi, la réalisation d'une telle boisson nécessite une manipulation du récipient. De plus, l'utilisateur devra intervenir à plusieurs reprises sur une interface de commande de la machine pour lancer la préparation à base de lait puis la préparation à base de café.

On connait également du document WO2013008177 une machine de préparation de boissons comportant une tête de distribution qui comprend une buse de distribution de café et un conduit d'acheminement d'eau chaude et/ou de vapeur.

Le but de la présente invention est de remédier aux inconvénients précités et de proposer une machine de préparation de boissons qui présente une mise en oeuvre simple et ergonomique, notamment pour réaliser une préparation à base de lait et de café.

Un autre but de la présente invention est de proposer une machine de préparation de boissons qui présente une conception simple et qui soit économique à mettre en œuvre.
Ces buts sont atteints avec une machine de préparation de boissons comportant au moins une buse de distribution de café et un dispositif rotatif d'agitation comprenant un outil rotatif autour d'un axe A et destiné à coopérer avec une préparation contenue dans un récipient, ledit dispositif rotatif d'agitation comportant un conduit d'acheminement d'eau chaude et/ou de vapeur d'une chaudière vers l'outil rotatif, caractérisée en ce qu'elle comporte une tête de distribution qui comprend l'au moins une buse de distribution de café et le dispositif rotatif d'agitation, ladite tête de distribution étant mobile entre une position haute d'attente dans laquelle la buse de distribution de café et l'outil rotatif sont situés au-dessus du récipient et une position basse de travail dans laquelle l'outil rotatif est situé dans le récipient et la buse de distribution de café est agencée au-dessus d'une ouverture supérieure du récipient.

Ainsi, l'utilisateur ne déplace pas le récipient pour réaliser la préparation à base de lait et de café. Il manipule uniquement la tête de distribution pour positionner l'outil rotatif dans le récipient et la buse de distribution de café au-dessus de l'ouverture supérieure du récipient.

De manière avantageuse, la machine de distribution de boisson comporte un circuit de commande muni d'un organe de commande conçu pour lancer une préparation à base de lait et de café à partir d'une seule action, notamment un seul appui. Ainsi, l'utilisateur peut réaliser une préparation à base de lait et de café par une manipulation de la tête de distribution et un appui sur l'organe de commande.
De préférence, la tête de distribution est mobile en translation.
Une telle disposition permet d'obtenir une tête de distribution mobile qui présente une conception simple et qui soit économique à mettre en œuvre.
De manière avantageuse, le dispositif d'agitation comporte un moteur électrique destiné à entrainer l'outil rotatif.

Ainsi, le moteur électrique est agencé sur la tête de distribution, au plus près de l'outil rotatif. De plus, la vitesse de rotation de l'outil rotatif peut être adaptée, notamment en fonction du type de préparation.

De préférence, le conduit d'acheminement d'eau chaude et/ou de vapeur comporte une partie tubulaire qui s'étend le long de l'axe A entre une première extrémité sur laquelle est agencé l'outil rotatif et une seconde extrémité agencée sur un arbre d'entrainement.

Ainsi, la partie tubulaire assure deux fonctions, acheminer l'eau chaude et/ou la vapeur vers l'outil rotatif et entrainer l'outil rotatif.

De manière avantageuse, l'arbre d'entrainement comporte une partie creuse d'acheminement d'eau chaude et/ou de vapeur sur laquelle est agencée la partie tubulaire.

Ainsi, l'arbre d'entrainement assure deux fonctions, acheminer l'eau chaude et/ou la vapeur vers l'outil rotatif et entrainer la partie creuse et l'outil rotatif.

De préférence, le dispositif rotatif d'agitation comporte une boite à vapeur, ladite boîte à vapeur comportant une chambre, un canal radial d'entrée de vapeur et deux paliers étanches de guidage de l'arbre d'entrainement de l'outil rotatif. La partie creuse d'acheminement d'eau chaude et/ou de vapeur relie la chambre à la partie tubulaire.

De préférence, la partie tubulaire est agencée de manière amovible sur l'arbre d'entrainement.

Par agencée de manière amovible, on comprend que la partie tubulaire est démontable de l'arbre d'entrainement sans outil.

Une telle disposition permet de nettoyer facilement l'outil rotatif après une préparation de boisson. De plus, une fois l'outil rotatif retiré, la tête de distribution peut être positionnée au-dessus d'un récipient pour distribuer de l'eau chaude par la partie creuse de l'arbre d'entrainement, le moteur n'étant pas mis en marche.

De manière avantageuse, la buse de distribution de café comporte un orifice de sortie et la distance D entre l'axe A de rotation de l'outil rotatif et l'orifice de sortie est inférieure à 10 cm, de préférence inférieure à 5 cm.

Une telle disposition permet à la tête de distribution d'être adaptée à la majorité des récipients utilisés pour réaliser une préparation à base de lait et de café.

Avantageusement, la buse de distribution de café comporte un orifice de sortie et une distance Z entre l'outil rotatif et l'orifice de sortie est supérieure à 4 cm, de préférence supérieure à 8 cm.

Une telle disposition permet de faire mousser le lait dans un premier temps puis de verser le café au-dessus de la mousse pour réaliser une strate de café distincte de la strate de mousse de lait.

De préférence, la buse de distribution de café comporte un orifice de sortie et l'outil rotatif est mobile par rapport à l'orifice de sortie dans un plan horizontal.

Ainsi, l'outil rotatif peut être positionné sensiblement au centre du récipient ou, pour certaines recettes, volontairement désaxé par l'utilisateur.

Avantageusement, la buse de distribution de café fait partie d'un circuit de distribution du café et le circuit de distribution comporte un conduit souple.

Une telle disposition permet d'obtenir une tête de distribution mobile qui présente une conception simple et économique à mettre en œuvre.

L'invention sera mieux comprise à l'étude du mode de réalisation pris à titre nullement limitatif et illustré dans les figures annexées dans lesquelles :
- La figure 1 illustre une vue en perspective d'une machine de préparation de boissons selon un mode particulier de réalisation de l'invention.
- La figure 2 illustre une vue en perspective de la tête de distribution de la machine de préparation de boissons illustrée sur la figure 1.
- La figure 3 illustre une vue en coupe selon la ligne III-III de la tête de distribution de la machine de préparation de boissons illustrée sur la figure 2.

On notera que, dans ce document, les termes «horizontal», «vertical», «inférieur», «supérieur», «longitudinal», «transversal», «haut», «bas», employés pour décrire la machine de distribution de boissons font référence à cette machine reposant sur un plan de travail, en situation d'usage.

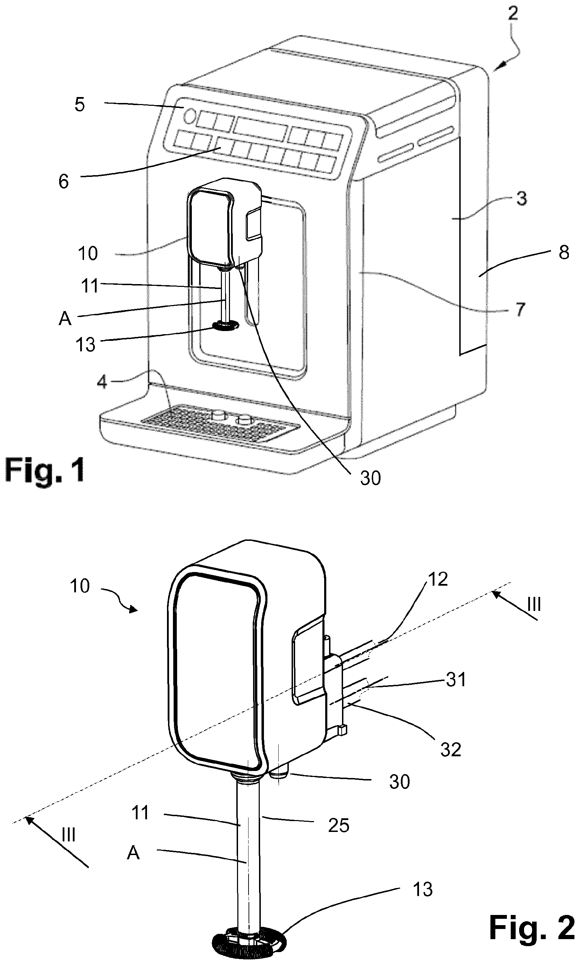

Dans l'exemple de réalisation représenté aux figures 1 à 3, une machine de distribution de boissons 2 comporte notamment un bâti 3, un support de récipient 4 sur lequel un récipient peut être disposé, et une tête de distribution 10 réglable en hauteur. Le support de récipient 4 peut par exemple comporter une grille de support et un bac récolte gouttes. La tête de distribution est montée coulissante sur une plaque support 7 attenante au bâti 3.

La tête de distribution 10 comporte une buse 30 de distribution de café et un dispositif rotatif d'agitation 11 comprenant un outil rotatif 13 autour d'un axe A et destiné à coopérer avec une préparation contenue dans le récipient. Le dispositif rotatif d'agitation 11 comporte un conduit 12 d'acheminement d'eau chaude et/ou de vapeur vers l'outil rotatif 13. La buse 30 de distribution de café fait partie d'un circuit de distribution 31 du café produit dans un dispositif d'infusion (non représenté sur les figures). La machine de préparation de boissons 2 comporte un réservoir 8 formant une alimentation en eau froide, un distributeur de café en poudre provenant d'un broyeur à café intégré au distributeur et le dispositif d'infusion alimenté en eau chaude par une chaudière (non représentés sur les figures). Le circuit de distribution 31 du café comporte un conduit souple 32 (Fig.2) pour permettre la mobilité de la tête de distribution 10.

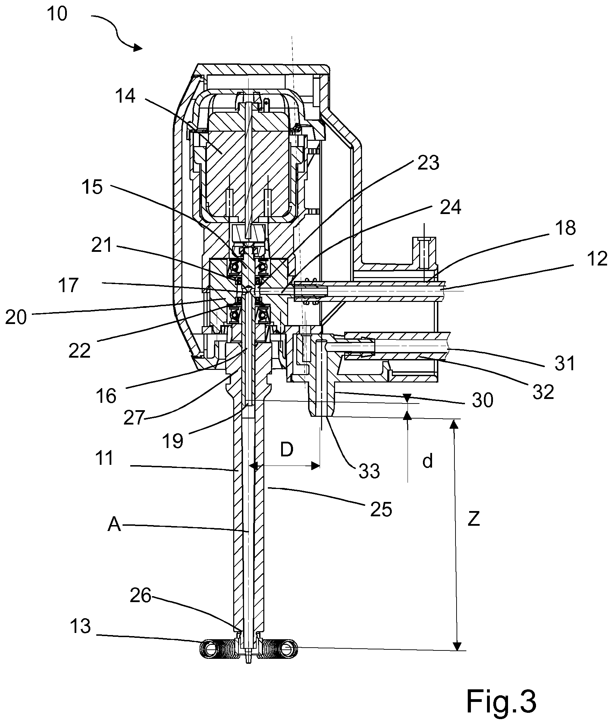

Tel que visible sur la figure 3, le dispositif rotatif d'agitation 11 comporte un moteur 14 électrique, un arbre d'entrainement 15, une boite à vapeur 20 et l'outil rotatif 13. L'outil rotatif 13 est agencé à une première extrémité 26 d'une partie tubulaire 25. La partie tubulaire 25 s'étend le long de l'axe A et comporte une deuxième extrémité 27 agencée sur l'arbre d'entrainement 15.

La boîte à vapeur 20 est traversée par l'arbre d'entrainement 15 et comporte deux paliers 21, 22 étanches de guidage de l'arbre d'entrainement 15. La boite à vapeur 20 comporte entre les deux paliers 21, 22 une chambre 23 alimentée en eau chaude et/ou en vapeur par un canal radial 24. L'arbre d'entrainement 15 présente une partie creuse 16 sur laquelle est agencé la deuxième extrémité 27 de la partie tubulaire 25. La partie creuse 16 comporte des ouvertures traversantes 17 qui permettent de faire communiquer l'intérieur de la partie creuse 16 avec la chambre 23. Ainsi le conduit 12 d'acheminement d'eau chaude et/ou de vapeur du dispositif rotatif d'agitation 11 comporte le canal radial 24, la chambre 23, les ouvertures traversantes 17, la partie creuse 16 et la partie tubulaire 25. Le conduit 12 d'acheminement d'eau chaude et/ou de vapeur comporte également un conduit souple 18 pour permettre la mobilité de la tête de distribution 10 par rapport au support de récipient 4.

La partie tubulaire 25 et l'outil rotatif 13 forme un ensemble qui est amovible de la tête de distribution 10. La partie tubulaire 25 est montée coulissante sur la partie creuse 16 de l'arbre d'entrainement 15 avec un léger serrage pour assurer l'entrainement en rotation. D'autres types d'assemblages démontables, notamment par baïonnettes sont possibles.

Lorsque la partie tubulaire 25 et l'outil rotatif 13 sont retirés, la tête de distribution 10 est déplaçable selon une direction verticale, parallèle à l'axe A, par rapport au support de récipient 4 entre une position basse dans laquelle un récipient de petite taille, comme une tasse destinée à contenir un ristretto, peut être disposé sur le support de récipient 4 et être alimenté en boisson par exemple en café à partir de la buse 30 de distribution de café sans risque d'éclaboussure, et une position haute dans laquelle un récipient de grande taille, comme un mug, peut être disposé sur le support de récipient 4 et être alimenté en boisson par exemple en eau à partir de la partie creuse 16 sans risque d'éclaboussure.
De manière avantageuse, la distance d entre un orifice de sortie 19 de la partie creuse 16 et un orifice de sortie 33 de la buse 30 de distribution de café mesurée selon une direction verticale est inférieure à 10 millimètres.
Lorsque la partie tubulaire 25 et l'outil rotatif 13 sont agencés sur l'arbre d'entrainement 15, la tête de distribution 10 est déplaçable selon une direction verticale, parallèle à l'axe A, par rapport au support de récipient 4 entre une position haute d'attente dans laquelle la buse 30 de distribution de café et l'outil rotatif 13 sont situés au-dessus du récipient et une position basse de travail dans laquelle l'outil rotatif 13 est situé dans le récipient et la buse 30 de distribution de café est agencée au-dessus d'une ouverture supérieure du récipient.
La machine de préparation de boissons 2 comporte un circuit de contrôle 5 (Fig.1) pour la commande et la gestion des cycles de préparation des boissons. Le circuit de contrôle 5 comporte plusieurs organes de commande 6 conçus pour, chacun, lancer une préparation à base de lait et de café à partir d'un seul appui, par exemple un cappuccino ou un café latte.
En fonctionnement, lorsque l'utilisateur veut réaliser une préparation à base de lait et de café, notamment un cappuccino, il verse du lait dans un récipient et le positionne sur le support de récipient 4, sous la tête de distribution 10 qui est en position haute d'attente. L'utilisateur déplace ensuite la tête de distribution 10 dans la position basse de travail pour amener l'outil rotatif 13 dans le lait et la buse 30 de distribution de café au-dessus d'une ouverture supérieure du récipient. L'utilisateur appuie alors sur l'organe de commande 6 pour lancer le cycle de préparation du cappuccino. Le circuit de contrôle 5 commande le démarrage du moteur 14 pour faire tourner l'outil rotatif 13 et commande la chaudière pour produire de la vapeur qui va arriver dans le lait par le conduit 12 d'acheminement. Ainsi, le lait va être chauffé et moussé. Après un temps prédéterminé, le circuit de contrôle 5 stoppe le moteur 14 et l'arrivée de vapeur puis commande la réalisation d'un café qui va s'écouler dans le récipient par la buse 30 de distribution de café. Une fois la préparation terminée, l'utilisateur remonte la tête de distribution 10 et peut désaccoupler l'outil rotatif 13 et la partie tubulaire 25 pour les nettoyer, par exemple en les plaçant dans un lave vaisselle.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une première variante de réalisation, l'outil rotatif est mobile par rapport à l'orifice de sortie de la buse de distribution dans un plan horizontal pour permettre de positionner l'outil rotatif sensiblement au centre du récipient ou, pour certaines recettes, permettre de le décaler du centre du récipient.

Dans une deuxième variante de réalisation, la machine de préparation de boissons comporte une tête de distribution complémentaire munie d'une buse de sortie de café complémentaire, la machine de préparation de boissons comportant une électrovanne pilotée par un circuit de commande pour diriger le café vers la buse de sortie de café ou vers la buse de sortie de café complémentaire.

Ainsi, la machine de préparation de boissons peut réaliser simultanément ou enchainer un café et une préparation à base de lait et de café, notamment de manière automatique.

## Revendications

1. Machine de préparation de boissons (2) comportant au moins une buse (30) de distribution de café et un dispositif rotatif d'agitation (11) comprenant un outil rotatif (13) autour d'un axe A et destiné à coopérer avec une préparation contenue dans un récipient, ledit dispositif rotatif d'agitation (11) comportant un conduit (12) d'acheminement d'eau chaude et/ou de vapeur vers l'outil rotatif (13) **caractérisée en ce qu'**elle comporte une tête de distribution (10) qui comprend l'au moins une buse (30) de distribution de café et le dispositif rotatif d'agitation (11), ladite tête de distribution (10) étant mobile entre une position haute d'attente dans laquelle la buse (30) de distribution de café et l'outil rotatif (13) sont situés au-dessus du récipient et une position basse de travail dans laquelle l'outil rotatif (13) est situé dans le récipient et la buse (30) de distribution de café est agencée au-dessus d'une ouverture supérieure du récipient.

2. Machine de préparation de boissons (2) selon la revendication 1, **caractérisée en ce qu'**elle comporte un circuit de commande muni d'un organe de commande (6) conçu pour lancer une préparation à base de lait et de café à partir d'une seule action, notamment un seul appui.

3. Machine de préparation de boissons (2) selon l'une quelconque des revendications précédentes, **caractérisée en ce que** la tête de distribution (10) est mobile en translation.

4. Machine de préparation de boissons (2) selon l'une quelconque des revendications précédentes, **caractérisée en ce que** le dispositif rotatif d'agitation (11) comporte un moteur (14) électrique destiné à entrainer l'outil rotatif (13).

5. Machine de préparation de boissons (2) selon l'une quelconque des revendications précédentes, **caractérisée en ce que** le conduit (12) d'acheminement d'eau chaude et/ou de vapeur comporte une partie tubulaire (25) qui s'étend le long de l'axe A entre une première extrémité (26) sur laquelle est agencé l'outil rotatif (13) et une seconde extrémité (27) agencée sur un arbre d'entrainement (15).

6. Machine de préparation de boissons (2) selon la revendication 5, **caractérisée en ce que** l'arbre d'entrainement (15) comporte une partie creuse (16) d'acheminement d'eau chaude et/ou de vapeur sur laquelle est agencée la partie tubulaire (25).

7. Machine de préparation de boissons (2) selon la revendication 6, **caractérisée en ce que** le dispositif rotatif d'agitation (11) comporte une boite à vapeur (20), ladite boîte à vapeur (20) comportant une chambre (23), un canal radial (24) d'entrée de vapeur, deux paliers (21, 22) étanches de guidage de l'arbre d'entrainement (15) de l'outil rotatif (13) et **en ce que** la partie creuse (16) d'acheminement d'eau chaude et/ou de vapeur relie la chambre (23) à la partie tubulaire (25).

8. Machine de préparation de boissons (2) selon l'une quelconque des revendications 5 à 7, **caractérisée en ce que** la partie tubulaire (25) est agencée de manière amovible sur l'arbre d'entrainement (15).

9. Machine de préparation de boissons (2) selon l'une quelconque des revendications précédentes, **caractérisée en ce que** la buse (30) de distribution de café comporte un orifice de sortie (33) et **en ce que** la distance D entre l'axe A de rotation de l'outil rotatif (13) et l'orifice de sortie (33) est inférieure à 10 cm, de préférence inférieure à 5 cm.

10. Machine de préparation de boissons (2) selon l'une quelconque des revendications précédentes, **caractérisée en ce que** la buse (30) de distribution de café comporte un orifice de sortie (33) et **en ce que** une distance Z entre l'outil rotatif (13) et l'orifice de sortie (33) est supérieure à 4 cm, de préférence supérieure à 8 cm.

11. Machine de préparation de boissons (2) selon l'une quelconque des revendications précédentes, **caractérisée en ce que** la buse de distribution de café comporte un orifice de sortie et **en ce que** l'outil rotatif est mobile par rapport à l'orifice de sortie dans un plan horizontal.

## Patentansprüche

1. Maschine zur Zubereitung von Getränken (2), aufweisend mindestens eine Düse (30) zur Ausgabe von Kaffee und eine drehbare Rührvorrichtung (11), die ein um eine Achse A drehbares Werkzeug (13) umfasst und dazu bestimmt ist, mit einer Zubereitung zusammenzuwirken, die in einem Behälter enthalten ist, wobei die drehbare Rührvorrichtung (11) eine Leitung (12) zum Leiten von heißem Wasser und / oder Dampf zu dem drehbaren Werkzeug (13) aufweist, **dadurch gekennzeichnet, dass** sie einen Ausgabekopf (10) aufweist, der mindestens eine Düse (30) zur Ausgabe von Kaffee und die drehbare Rührvorrichtung (11) umfasst, wobei der Ausgabekopf (10) zwischen einer hohen Warteposition, in der sich die Düse (30) zur Ausgabe von Kaffee und das drehbaren Werkzeug (13) oberhalb des Behälters befinden, und einer niedrigen Arbeitsposition, in der sich das drehbare Werkzeug (13) in dem Behälter befindet und die Düse (30) zur Ausgabe von Kaffee über einer oberen Öffnung des Behälters angeordnet ist, beweglich ist.

2. Maschine zur Zubereitung von Getränken (2) nach Anspruch 1, **dadurch gekennzeichnet, dass** sie einen Steuerkreis umfasst, der mit einem Steuerelement (6) versehen ist, das zum Starten einer Zubereitung auf der Basis von Milch und Kaffee ausgehend von einer einzelnen Aktion, insbesondere einer einzelnen Betätigung, ausgelegt ist.

3. Maschine zur Zubereitung von Getränken (2) nach einem der vorstehenden Ansprüche, **dadurch gekennzeichnet, dass** der Ausgabekopf (10) in Translation beweglich ist.

4. Maschine zur Zubereitung von Getränken (2) nach einem der vorstehenden Ansprüche, **dadurch gekennzeichnet, dass** die drehbare Rührvorrichtung (11) einen Elektromotor (14) aufweist, der dazu bestimmt ist, das drehbaren Werkzeug (13) anzutreiben.

5. Maschine zur Zubereitung von Getränken (2) nach einem der vorsthenden Ansprüche, **dadurch gekennzeichnet, dass** die Leidung (12) zum Leiten von heißem Wasser und / oder Dampf einen röhrenförmigen Teil (25) aufweist, der sich entlang der Achse A zwischen einem ersten Ende (26), auf dem das drehbaren Werkzeug (13) angeordnet ist, und einem zweiten Ende (27) erstreckt, das auf einer Antriebswelle (15) angeordnet ist.

6. Maschine zur Zubereitung von Getränken (2) nach Anspruch 5, **dadurch gekennzeichnet, dass** die Antriebswelle (15) einen Hohlteil (16) zum Leiten von heißem Wasser und / oder Dampf aufweist, auf dem der rohrförmige Teil (25) angeordnet ist.

7. Maschine zur Zubereitung von Getränken (2) nach Anspruch 6, **dadurch gekennzeichnet, dass** die drehbare Rührvorrichtung (11) eine Dampfbox (20) aufweist, wobei die Dampfbox (20) eine Kammer (23), einen radialen Dampfeinlasskanal (24), zwei abgedichtete Lager (21, 22) zur Führung der Antriebswelle (15) des drehbaren Werkzeugs (13) aufweist, und dass das Hohlteil (16) zum Leiten von heißem Wasser und / oder Dampf die Kammer (23) mit dem rohrförmigen Teil (25) verbindet.

8. Maschine zur Zubereitung von Getränken (2) nach einem der Ansprüche 5 bis 7, **dadurch gekennzeichnet, dass** das rohrförmige Teil (25) entfernbar auf der Antriebswelle (15) angeordnet ist.

9. Maschine zur Zubereitung von Getränken (2) nach einem der vorsthenden Ansprüche, **dadurch gekennzeichnet, dass** die Düse zur Ausgabe von Kaffee (30) eine Auslassöffnung (33) aufweist, und dass der Abstand D zwischen der Drehachse A des drehbaren Werkzeugs (13) und der Auslassöffnung (33) kleiner als 10 cm, vorzugsweise kleiner als 5 cm, ist.

10. Maschine zur Zubereitung von Getränken (2) nach einem der vorstehenden Ansprüche, **dadurch gekennzeichnet, dass** die Düse zur Ausgabe von Kaffee (30) eine Auslassöffnung (33) aufweist, und dass ein Abstand Z zwischen dem drehbaren Werkzeug (13) und der Auslassöffnung (33) größer als 4 cm, vorzugsweise größer als 8 cm, ist.

11. Maschine zur Zubereitung von Getränken (2) nach einem der vorstehenden Ansprüche, **dadurch gekennzeichnet, dass** die Düse zur Ausgabe von Kaffee eine Auslassöffnung aufweist, und dass das drehbaren Werkzeug relativ zu der Auslassöffnung in einer horizontalen Ebene beweglich ist.

## Claims

1. Beverage preparation machine (2) comprising at least one nozzle (30) for dispensing coffee and a rotary stirring device (11) comprising a rotary tool (13) around an axis A and intended to cooperate with a preparation contained in a container, said rotary stirring device (11) comprising a conduit (12) for routing hot water and/or steam to the rotary tool (13) **characterised in that** it comprises a dispensing head (10) which comprises at least one nozzle (30) for dispensing coffee and the rotary stirring device (11), said dispensing head (10) being movable between a high standby position in which the coffee dispensing nozzle (30) and the rotary tool (13) are located above the container and a low working position in which the rotary tool (13) is located in the container and the nozzle (30) coffee dispenser is arranged above an upper opening of the container.

2. Beverage preparation machine (2) according to claim 1, **characterised in that** it comprises a control circuit provided with a control member (6) designed to launch a preparation based on milk and coffee from a single action, in particular a single press.

3. Beverage preparation machine (2) according to any one of the preceding claims, **characterised in that** the dispensing head (10) is movable in translation.

4. Beverage preparation machine (2) according to any one of the preceding claims, **characterised in that** the rotary stirring device (11) comprises an electric motor (14) intended to drive the rotary tool (13).

5. Beverage preparation machine (2) according to any one of the preceding claims, **characterised in that** the conduit (12) for conveying hot water and/or steam comprises a tubular part (25) which extends along the axis A between a first end (26) on which the rotary tool (13) is arranged and a second end (27) arranged on a drive shaft (15).

6. Beverage preparation machine (2) according to claim 5, **characterised in that** the drive shaft (15) has a hollow portion (16) for conveying hot water and/or steam on which is arranged the tubular part (25).

7. Beverage preparation machine (2) according to claim 6, **characterised in that** the rotary stirring device (11) comprises a steam box (20), said steam box (20) comprising a chamber (23), a radial steam inlet channel (24), two sealed bearings (21, 22) for guiding the drive shaft (15) of the rotary tool (13) and **in that** the hollow part (16) routing hot water and/or steam connects the chamber (23) to the tubular part (25).

8. Beverage preparation machine (2) according to any one of claims 5 to 7, **characterised in that** the tubular part (25) is removably arranged on the drive shaft (15).

9. Beverage preparation machine (2) according to any one of the preceding claims, **characterised in that** the nozzle (30) for dispensing coffee has an outlet orifice (33) and **in that** the distance D between the axis A of rotation of the rotary tool (13) and the outlet orifice (33) is less than 10 cm, preferably less than 5 cm.

10. Beverage preparation machine (2) according to any one of the preceding claims, **characterised in that** the nozzle (30) for dispensing coffee has an outlet orifice (33) and **in that** the distance Z between the rotary tool (13) and the outlet orifice (33) is greater than 4 cm, preferably greater than 8 cm.

11. Beverage preparation machine (2) according to any one of the preceding claims, **characterised in that** the coffee dispensing nozzle comprises an outlet orifice and **in that** the rotary tool is movable relative to the orifice exit in a horizontal plane.
